# EUROPÄISCHE PATENTSCHRIFT

(11) **EP 1 188 089 B1**
(45) Veröffentlichungstag und Bekanntmachung des Hinweises auf die Patenterteilung: **06.11.2002**
(21) Anmeldenummer: 00938790.3
(22) Anmeldetag: 15.06.2000
(51) Int. Cl.: G02B 23/24

(54) **ENDOSKOP MIT MAGNETKÖRPERN**
ENDOSCOPE WITH MAGNETIC BODIES
ENDOSCOPE A CORPS AIMANTES

(30) Priorität: 18.06.1999 DE 19927814
(43) Veröffentlichungstag der Anmeldung: 20.03.2002
(73) Patentinhaber: OLYMPUS WINTER & IBE GMBH, 22045 Hamburg (DE)
(72) Erfinder: WITTE, Lars, D-22047 Hamburg (DE)
(74) Vertreter: Schaefer, Konrad, Dipl.-Phys.
(86) Internationale Anmeldenummer: EP0005480
(87) Internationale Veröffentlichungsnummer: WO00079323

(56) Entgegenhaltungen:
- EP-A- 0 347 140
- DE-A- 19 521 654
- US-A- 5 836 867

## Beschreibung

Die Erfindung betrifft ein Endoskop der im Oberbegriff des Anspruch 1 genannten Art.

Endoskope mit abgedichtetem-Gehäuse können darin ihre empfindlichen Bauelemente, wie optische Linsen, feinmechanische Bauteile, elektronische Komponenten und dergleichen, geschützt aufnehmen. Sie sind daher insbesondere in der Medizin verwendbar und halten die inneren Bauelemente frei von Einflüssen durch Körperflüssigkeiten, Sterilisationsmedien oder zur Sterilisation verwendeten Heißdampf.

Im Inneren des abgedichteten Gehäuses vorgesehene Bewegungseimichtungen dienen beispielsweise zum Schalten von Ventilen für das Gehäuse durchlaufende Leitungen, zum Schalten elektrischer Schalter und insbesondere zur Verstellung optischer Einrichtungen, wie beispielsweise Umlenkspiegel, Linsen, Polarisationsfilter und dergleichen. Probleme wirft dabei die Steuerung von außen durch die Wand des Gehäuses auf die mit abgedichteten mechanischen Durchführungen nur sehr schwer langdauernd dampfdicht gemacht werden kann.

Daher weisen gattungsgemäße Endoskope eine Stelleinrichtung auf, die mit einem oder auch mehreren Magnetkörpern durch die unmagnetische Wand hindurch mit gegenüberliegenden inneren Magnetkörpern in Krafteingriff steht und eine mit dem inneren Magnetkörper gekoppelte Bewegungseinrichtung steuern kann, mit der die entsprechenden zu verstellenden Bauelemente gesteuert werden. Mit dieser Bauweise läßt sich ein hermetisch abgedichtetes Gehäuse ohne irgendwelche Durchbrechungen schaffen.

Derartige gattungsgemäße Endoskope sind aus DE 197 18 189 A1, DE 195 21 654 A1, DE 197 13 276 A1 sowie US 5 836 867 bekannt.

Alle diese Konstruktionen sind zur kontinuierlichen Verstellung über einen Stellbereich vorgesehen und müssen mit sehr stärkem Krafteingriff, der zumeist über mehrere Paare von in Krafteingriff stehenden Permanentmagneten erreicht wird, eine sehr exakte Mitnahme bewirken. Diese Konstruktionen sind sehr aufwendig. Dennoch besteht stets eine restliche Stellungenauigkeit, da die äußeren Magnetkörper die inneren Magnetkörper nicht 100 % genau positionieren können.

Die Aufgabe der vorliegenden Erfindung besteht darin, ein gattungsgemäßes Endoskop zu schaffen, das konstruktiv einfach und exakt einstellbar ist.

Diese Aufgabe wird mit den Merkmalen des Anspruches 1 gelöst.

Erfindungsgemäß nimmt, wie bei den bekannten Konstruktionen, der äußere Magnetkörper den inneren Magnetkörper kraftschlüssig also unexakt mit, bewegt ihn jedoch gegen einen Anschlag, wird sodann noch ein Stück weiterbewegt, dann in einer Stellposition gesichert und hält dann den inneren Magnetkörper kraftschlüssig gegen den Anschlag, also in einer 100 % exakten Position. Der konstruktive Aufwand zur Erzeugung hoher Magnetkräfte kann dabei erheblich reduziert werden, so daß die Konstruktion stark vereinfachbar ist.

Bei üblicher rohrförmiger Ausbildung der Wand eines Endoskopgehäuses kann die erfindungsgemäße Konstruktion z.B. zur Axialverstellung einer Linse oder dergleichen verwendet werden. Es kann auch nur eine exakt einzustellende Position der Bewegungseinrichtung erforderlich sein, während im übrigen Bewegungsbereich entsprechend dem Stand der Technik mit ungenauer Mitnahme gearbeitet wird. Vorteilhaft sind jedoch die Merkmale des Anspruches 2 vorgesehen. Diese Konstruktion ist hervorragend zum Drehen einer inneren Bewegungseinrichtung zwischen zwei Sollstellungen geeignet. Mit einer solchen Konstruktion kann beispielsweise ein Polarisationsfilter exakt auf 0° und 90° eingestellt werden.

Dabei sind vorteilhaft die Merkmale des Anspruches 3 vorgesehen. Bei dieser Konstruktion ist nach wie vor Drehverstellung möglich, zusätzlich wird jedoch die Bewegungseinrichtung im Inneren des Gehäuses in einer axialen Richtung gegen einen Anschlag gehalten. Im Falle des erwähnten Polarisationsfilters wird dieses also gegen einen geeigneten Drehanschlag in einer axialen Richtung gehalten. Dadurch kann vorhandenes mechanisches Spiel beseitigt und eine zweite mechanische Gegenlagerung eingespart werden.

In der Zeichnung ist die Erfindung beispielsweise und schematisch dargestellt, es zeigen:
- Fig. 1: Einen Achsschnitt durch ein Endoskop mit Drehverstellung,
- Fig. 2: einen Teilschnitt nach Linie 1-1 in Fig. 1 und
- Fig. 3: eine stark schematisierte Querschnittdarstellung zu Fig. 1.

In den Figuren ist ein Endoskop mit einem im dargestellten Bereich aus einer Wand 1 gebildeten, einen Innenraum völlig nach außen abgedichtet umschließenden Gehäuse dargestellt. Im dargestellten Bereich ist eine magnetische Einstellvorrichtung dargestellt.

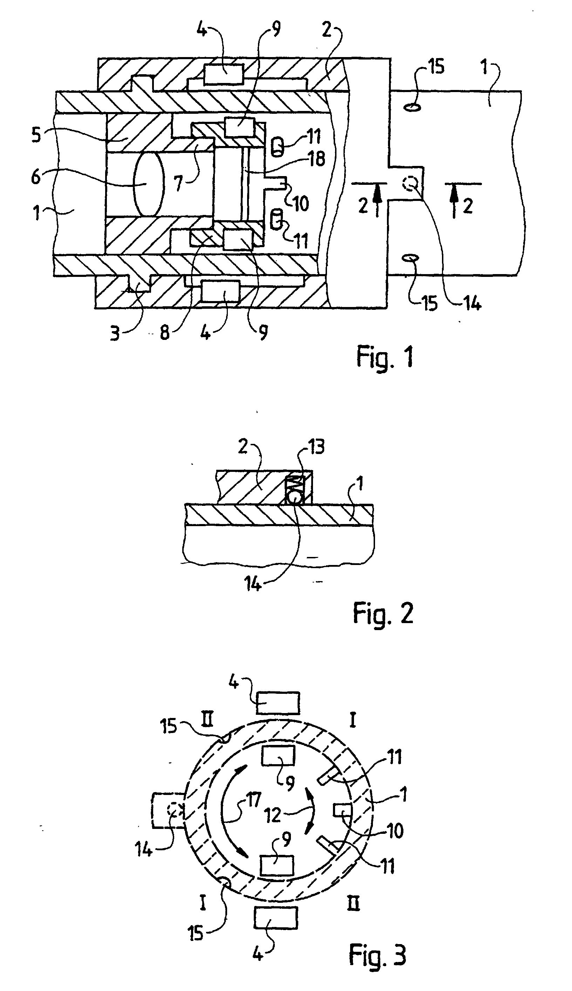

Diese weist eine äußere Stelleinrichtung auf mit einem äußeren Ring 2, der wie in Fig. 1 dargestellt, in Achsrichtung auf einem Außenflansch 3 der Wand 1 gesichert, drehbar auf der Wand 1 gelagert ist. Im Ausführungsbeispiel sind am Ring 2 zwei äußere Magnetkörper 4 befestigt, die beispielsweise als Permanentmagnete, mit einem Pol radial nach innen gerichtet, ausgebildet sind.

Auf der Innenseite der Wand 1 ist im Ausführungsbeispiel ein Teil 5 einer optischen Einrichtung,angedeutet mit einer Linse 6, befestigt. Das Teil 5 trägt in einer axialen Richtung einen zur Achse des Rohres 1 konzentrischen Rohrflansch 7, auf dem drehbar und, wie dargestellt, gegen den Rohrflansch 7 in axialer Anlage gesichert, ein innerer Ring 8 drehbar gelagert ist.

Am inneren Ring 8 sind zwei innere Magnetkörper 9 befestigt, die beispielsweise ebenfalls als Permanentmagneten, jeweils mit einem Pol radial nach außen, ausgebildet sein können. Es können jedoch auch beispielsweise die äußeren Magnetkörper 4 als Permanentmagneten und die inneren Magnetkörper 9 nur aus magnetisch hochpermeablem Eisenmaterial bestehen. Um die zwischen den Magnetkörpern 4, 9 wirkenden Magnetfelder nicht zu stören, sind die übrigen dargestellten Bauelemente, insbesondere die Wand 1 aus magnetisch gut durchlässigem, unmagnetischem Material wie beispielsweise geeignetem Edelstahl gefertigt.

Wie in Fig. 3 angedeutet, stehen die inneren und äußeren Magnetkörper sich an der Wand 1 genau gegenüber. Sie sind anziehend gepolt. Daher erfolgt bei Drehung des äußeren Ringes 2 Drehmitnahme des inneren Ringes 8. Die Magnete können jedoch bei geeigneter, etwas winkelversetzter Anordnung auch abstoßend aufeinander wirken, mit demselben Effekt der magnetischen Mitnahme des inneren Ringes 8 durch den äußeren Ring 2. Anstelle der zwei dargestellten Magnetkörperpaare reicht auch ein Magnetkörperpaar 4, 9, beispielsweise das in der Fig. 1 oben dargestellte Paar, zur magnetischen Drehmitnahme aus.

Wie in den Fig. 1 und 3 dargestellt, weist der innere Ring 8 an einer Stelle seines Umfanges einen axial erstreckten Vorsprung 10 auf. Auf der Innenseite der Wand 1 sind im Drehbereich des Vorsprunges 10 zwei Anschläge 11 befestigt. Der innere Ring 8 läßt sich also nur in dem in Fig. 3 dargestellten Winkelbereich 12 drehen.

Der äußere Ring 2 weist, wie die Fig. 1 und 2 zeigen, in einem radial angeordneten Kanal eine mit einer Feder 13 abgestützte Rastkugel 14 auf, für die auf der Drehbewegungsbahn der Kugel 14 bei Verdrehen des äußeren Ringes 2 auf der Außenfläche der Wand 1 zwei Rastvertiefungen 15 in dem in Fig. 3 angedeuteten Winkelabstand 17 vorgesehen sind.

In der in den Fig. 1 und 3 dargestellten Drehposition der beiden Ringe 2 und 8 befinden sich diese in gegenseitiger magnetischer Kopplung in der Mitte zwischen den Endpunkten ihrer Bewegung. Wird nun am äußeren, als Stelleinrichtung dienenden Ring 2 angefaßt und dieser beispielsweise im Uhrzeigersinn bis in die Stellung 1 (Fig. 3) gedreht, in der er dann gesichert einrastet, so wird der innere Ring 8 mitgedreht, bis er ebenfalls in Stellung I in Anschlag mit seinem Vorsprung 10 gegen einen der Endanschläge 11 gelangt. Da der Drehwinkelbereich 17 des äußeren Ringes 2 etwas größer ist als der Drehwinkelbereich 12 des inneren Ringes 8. werden dabei die beiden äußeren Magnete 4 etwas weiter gedreht, als ihnen die inneren Magnete 9 folgen können. Der innere Ring 8 wird daher mit magnetischer Haltekraft gegen den Anschlag 11 in exakt eingestellter Position gehalten. Bei entgegengesetzter Drehrichtung kann die Anordnung aus der Position I in die Position II mit dem selben Effekt in gesicherte Anlage gedreht werden.

Wie in Fig. 1 dargestellt, dient der innere Ring 8 zur Drehverstellung eines beispielsweise dargestellten, in diesem Ring 8 befestigten Polarisationsfilters 18, das auf diese Weise um einen bestimmten Winkel, nämlich den Winkelbereich 12 (Fig. 3) sehr genau in zwei Winkelpositionen verstellbar ist.

Auch zwischen den Endanschlägen 11, also den in Fig. 3 dargestellten Endpositionen I und II. können Winkel eingestellt und durch kraftschlüssige Magnetkopplung der Magnetkörperpaare 4, 9 gehalten werden, jedoch mit geringerer Einstellpräzision.

Wie Fig. 1 zeigt, ist zusätzlich die Anordnung der äußeren Magnetkörper 4 gegenüber dem inneren Magnetkörper 9 in Achsrichtung versetzt. Der äußere Ring 2 ist auf dem Flansch 3 in Achsrichtung gehalten. Es ergibt sich somit auf den inneren Ring 8 eine in Achsrichtung wirkende Kraft, die ihn in Richtung zum Rohrflansch 7 zieht und dort in der, in Fig. 1 dargestellten, axialen Anschlaglage hält. Hier vorhandenes Spiel wird somit ausgeschaltet. Es wird eine exakte axiale Abstandslage des Polarisationsfilters 18 zur Linse 6 gewährleistet. Im Ring 2 kann also beispielsweise auch ein auf exakten Abstand zu haltendes optisches Element wie beispielsweise eine weitere Linse angeordnet sein. Da der innere Ring 8 gegen den Rohrflansch 7 magnetisch gehalten ist, kann eine mechanische Gegenlagerung für den inneren Ring 8 auf seiner dem Rohrflansch 7 in Achsrichtung gegenüberliegenden Seite entfallen.

## Patentansprüche

1. Endoskop mit abgedichtetem Gehäuse, an dem innere (9) mit einer Bewegungseinrichtung (8), gekoppelte und äußere (4) mit einer Stelleinrichtung (2) versehene Magnetkörper (4, 9) vorgesehen sind, die durch die Wand (1) des Gehäuses in magnetischem Krafteingriff miteinander gekoppelt sowie parallel zur Wand bewegbar sind, **dadurch gekennzeichnet, daß** der innere Körper (9) gegen einen Anschlag (7, 11) bewegbar und der äußere Körper (4) unter magnetischer Mitnahme des inneren Körpers (9) über die Anschlagposition (7, 11) des inneren Körpers (9) hinaus in einer gesicherten Stellposition (3, I, II) fixierbar angeordnet ist.

2. Endoskop nach Anspruch 1, wobei die Gehäusewand (1) rohrförming ist, **dadurch gekennzeichnet, daß** die Stelleinrichtung (2) und die Bewegungseinrichtung (8) je einen drehbar gelagerten, axial gesicherten Ring (2)(8) aufweisen, auf denen die beiden Körper (4, 9) angeordnet sind, wobei für den inneren Ring (8) zwei Drehanschläge (11) und für den äußeren Ring (2) zwei gesicherte Stellpositionen (15) vorgesehen sind, zwischen denen der äußere Ring verstellbar ist.

3. Endoskop nach Anspruch 2, **dadurch gekennzeichnet, daß** der äußere Körper (4) gegen den inneren Körper (9) axial versetzt gehalten ist.

## Claims

1. Endoscope with a sealed housing on which inner magnetic bodies (9), coupled to a movement device (8), and outer magnetic bodies (4), provided with a positioning device (2), are provided, coupled to one another in magnetic force engagement through the wall (1) of the housing and are movable parallel to the wall, **characterised in that** the inner body (9) is movable against a stop (7, 11) and the outer body (4) is arranged to be fixable in a secured adjustment position (3, I, II), whilst magnetically entraining the inner body (9), beyond the stop position (7, 11) of the inner body (9).

2. Endoscope as claimed in Claim 1, the housing wall (1) being tubular, **characterised in that** the positioning device (2) and the movement device (8) have a respective rotatably mounted, axially secured ring (2) (8), on which the two bodies (4, 9) are arranged, whereby two rotary stops (11) are provided for the inner ring (8) and two secured adjustment positions (15) are provided for the outer ring (2), between which the outer ring is movable.

3. Endoscope as claimed in Claim 2, **characterised in that** the outer body (4) is mounted axially offset with respect to the inner body (9).

## Revendications

1. Endoscope à boîtier étanchéifié équipé de corps magnétiques (4, 9) intérieur (9) couplé à un dispositif de mouvement (8) et extérieur (4) muni d'un dispositif de commande (2), lesquels corps magnétiques s'entraînent à travers la paroi (1) du boîtier par accouplement magnétique et sont mobiles parallèlement à la paroi, **caractérisé en ce que** le corps intérieur (9) est mobile en direction d'une butée (7, 11) et le corps extérieur (4) est agencé de façon à pouvoir, en entraînant magnétiquement le corps intérieur (9), être fixé au-delà de la position de butée (7, 11) du corps intérieur (9) en une position d'arrêt (3, I, II) définie.

2. Endoscope selon la revendication 1 et dont la paroi (1) de boîtier est de forme tubulaire, **caractérisé en ce que** le dispositif de commande (2) et le dispositif de mouvement (8) présentent chacun une bague (2) (8) logées de façon à pouvoir tourner et fixées dans le sens axial et sur lesquelles sont agencés les deux corps (4, 9), deux butées (11) de fin de rotation (11) étant prévues pour la bague intérieure (8) et deux positions d'arrêt (15) définies étant prévues pour la bague extérieure (2), positions entre lesquelles la bague extérieure peut être déplacée.

3. Endoscope selon la revendication 2, **caractérisé en ce que** le corps extérieur (4) est maintenu en une position axialement décalée par rapport au corps intérieur (9).
